# EUROPÄISCHE PATENTSCHRIFT

(11) **EP 1 121 012 B1**
(45) Veröffentlichungstag und Bekanntmachung des Hinweises auf die Patenterteilung: **02.05.2003**
(21) Anmeldenummer: 99936481.3
(22) Anmeldetag: 06.07.1999
(51) Int. Cl.: A01D 90/04

(54) **SCHNEIDEINRICHTUNG FÜR LANDWIRTSCHAFTLICHE ERNTEMASCHINEN**
CUTTING DEVICE FOR AN AGRICULTURAL HARVESTER
DISPOSITIF DE COUPE POUR MOISSONNEUSE AGRICOLE

(30) Priorität: 18.07.1998 DE 19832463
(43) Veröffentlichungstag der Anmeldung: 08.08.2001
(73) Patentinhaber: Maschinenfabrik Bernard Krone GmbH, 48480 Spelle (DE)
(72) Erfinder: KRONE, Bernard, D-48480 Spelle (DE); STEGLICH, Christian, D-49832 Freren (DE); WERNSMANN, Thomas, D-48282 Emsdetten (DE)
(74) Vertreter: Pott, Ulrich
(86) Internationale Anmeldenummer: EP9904679
(87) Internationale Veröffentlichungsnummer: WO00003584

(56) Entgegenhaltungen:
- EP-A- 0 028 395
- EP-A- 0 341 508

## Beschreibung

Die Erfindung betrifft eine Schneideinrichtung für landwirtschaftliche Erntemaschinen wie beispielsweise Ladewagen oder Ballenpressen zur Ernte von landwirtschaftlichem Halmoder Blattgut wie Gras oder Heu nach dem Oberbegriff des Anspruchs 1. Solche Schneideinrichtungen sind aus der Praxis in vielfältigen Ausführungen bekannt und umfassen im wesentlichen ein um eine horizontale Achse rotierend angetriebenes und mit Förderzinken versehenes Förderorgan, welches mit in einen Förderkanal hineinragenden Schneidmessern zusammenwirkt, um das von einer Aufnahmevorrichtung aufgenommene Halm- oder Blattgut zu schneiden und es dann einem nachgeordneten Laderaum zuzuführen. Insbesondere bei Ballenpressen zur Herstellung von runden oder quaderförmigen Erntegutballen steht zum Einbau derartiger Schneideinrichtungen nur ein begrenzter Einbauraum zur Verfügung.

In der EP 0 341 508 A1 und der DE 31 41 414 A1 sind Schneideinrichtungen für Rundballenpressen und Selbstladeerntewagen offenbart, bei denen jedes Messer über einen federnd nachgiebigen Messerhalter in Form eines Messerhebels in der Schneidstellung abgestützt ist und somit einem Stein oder dgl. Fremdkörper selbsttätig ausweichen kann. Die Messerhebel sind in etwa der Mitte an einem feststehenden Bolzen gelagert, wobei der dem Messer zugewandte Abschnitt mit einer daran angebrachten Messerrolle in eine Vertiefung am Rücken der Messer eingreift und der andere Abschnitt sich mit Kurvenscheiben einer den Messerhebeln nachgeordneten Schaltwelle in Eingriff befindet. Für jeden Messerhebel und damit für jedes Messer ist eine Kurvenscheibe vorgesehen, wobei die Kurvenscheiben so versetzt zueinander am Umfang der Schaltwelle angebracht sind, daß entweder alle, eine bestimmte Anzahl oder keiner der Messerhebel mit einer Kurvenscheibe zur Verstellung der Schnittlänge der Schneideinrichtung in Eingriff stehen. Diese Schneideinrichtung ist zum einen mit dem Mangel behaftet, daß insbesondere die Unterbringung der Messerhebel sowie der nachgeordneten Schaltwelle einen großen Einbauraum in Anspruch nimmt, so daß hierdurch die Bodenfreiheit der landwirtschaftlichen Erntemaschine nachteilig beeinflußt wird. Weiterhin ist zur Betätigung der Schaltwelle und damit zur Verstellung der Schnittlänge ein solch großer Kraftaufwand erforderlich, daß ein direktes manuelles Verdrehen der Schaltwelle durch eine Bedienperson nicht möglich ist. Vielmehr sind dazu aufwendige Übersetzungsgetriebe oder dgl. Antriebsmittel erforderlich.

In der eigenen älteren DE 32 13 199 C2 wird ein Ladewagen mit einer Schneideinrichtung offenbart, bei der die in den Förderkanal hineinragenden Schneidmesser über Stützklauen, die auf einer Schaltwelle in einzelnen Reihen in achsparalleler Ausrichtung in jeweils unterschiedlicher Zahl angebracht sind, in der Schneidstellung abgestützt werden. Stützkanten am Rücken der Schneidmesser stützen sich dabei unter Bildung eines spitzen Druckwinkels auf den Stützklauen der Schaltwelle ab, so daß beim Auftreten einer übermäßigen Belastung an einem oder mehreren Messern durch eine Verdrehen der Schaltwelle entgegen der Wirkung einer Überlastsicherung die Stützklauen sich aus dem Wirkbereich mit der Stützkanten der Schneidmesser herausbewegen und somit eine Schwenkbewegung der Schneidmesser aus der Schneidstellung in eine Nichtschneidstellung freigeben. Ein Mangel dieser Schneideinrichtung besteht darin, daß beim Auftreten eines Steines oder dgl. Fremdkörper an einem Schneidmesser gleich eine Freigabe aller eingeschalteten Schneidmesser für eine Schwenkbewegung aus der Schneidstellung erfolgt. Eine Absicherung einzelner Schneidmesser gegen Überlast und Beschädigung ist hier also nicht möglich.

Aufgabe der Erfindung ist es daher, eine Schneideinrichtung für landwirtschaftliche Erntemaschinen der vorstehend genannten Art zu schaffen, die in einer kompakten, wenig Einbauraum beanspruchenden Bauform eine zuverlässige Absicherung eines jeden einzelnen Schneidmessers gewährleistet, einfach und kostengünstig herzustellen ist und bei der eine Verstellung der Schnittlänge von einer Bedienperson mit geringem Kraftaufwand durchführbar ist. Zur Lösung der gestellten Aufgabe zeichnet sich die Schneieinrichtung der vorstehend genannten Art durch die im kennzeichnenden Teil des Anspruches 1 angegebenen Merkmale aus. Hinsichtlich der weiteren Ausgestaltung der Erfindung wird auf die Ansprüche 2 bis 17 verwiesen.

Bei einer Schneideinrichtung für landwirtschaftliche Erntemaschinen wie beispielsweise Ladewagen oder Ballenpressen wird durch die Anwendung der erfindungsgemäßen Merkmale eine zuverlässige Absicherung eines jeden einzelnen Schneidmessers der Schneideinrichtung geschaffen, wobei der dazu notwendige Einbauraum auf ein Minimum beschränkt bleibt und somit selbst bei Ballenpressen und insbesondere bei Ballenpressen zur Herstellung von quaderförmigen Erntegutballen keine Beeinträchtigungen der Bodenfreiheit eintreten. Dies wird dadurch erreicht, daß jeder Messerhalter zugleich als Stütz- und Schaltglied ausgebildet ist, das auf einer quer zur Fahrtrichtung angeordneten Schaltwelle drehbar gelagert wird und über einen durch eine Feder gebildeten Kraftspeicher nachgiebig mit der Schaltwelle verbunden ist. Der Drehbereich eines jeden Stütz- und Schaltgliedes erstreckt sich dabei, ausgehend von einem beispielsweise als Spannstift ausgeführten Anschlagmittel entgegen der Kraftrichtung der Feder, beispielsweise einer Verdrehfeder. Diese drehbewegliche Anbringung der Stütz- und Schaltglieder auf der Schaltwelle wird zur nachgiebigen Abstützung der Schneidmesser in der Schneidstellung genutzt. Beispielsweise ausgelöst durch einen Stein oder dgl. Fremdkörper im Förderkanal kann ein Schneidmesser dadurch selbsttätig aus der Schneidstellung in eine Nichtschneidstellung zurückschwenken, wobei das zugehörige, mit der rückwärtigen Stützkante des Schneidmessers zusammenwirkende Stütz- und Schaltglied auf der Schaltwelle entgegen der Kraftrichtung der Feder zurückgeschwenkt wird. Nach dem Passieren des Fremdkörpers wird dann unterstützt durch die Krafteinwirkung des Kraftspeichers das Schneidmesser in die Schneidstellung zurückbewegt.

Es ist vorgesehen, daß die Stütz- und Schaltglieder zumindest zwei Schaltstellungen zur nachgiebigen Abstützung der zugehörigen Schneidmesser in der Schneidstellung und eine Schaltstellung zur Freigabe einer Schwenkbewegung der zugehörigen Schneidmesser aus der Schneidstellung in die Nichtschneidstellung aufweisen. Bei einer vollen Drehbewegung der Stütz- und Schaltglieder ist also eine Schaltstellung einstellbar, in der alle Schneidmesser in der Schneidstellung nachgiebig abgestützt sind, während in zwei weiteren Schaltstellungen sich jeweils nur jedes zweite Schneidmesser in der Schneidstellung befindet und dort nachgiebig abgestützt ist. Ein weiterer Aspekt der Erfindung sieht vor, daß zwischen den jeweiligen Schaltstellungen eine Zwischenstellung einstellbar ist. Diese Zwischenstellung dient dazu, eine Schwenkbewegung aller Schneidmesser gleichzeitig aus der Schneidstellung in die Nichtschneidstellung zu ermöglichen. Zum Umschalten zwischen den jeweiligen Schaltstellungen ist also eine gemeinsame Drehbewegung der Stütz- und Schaltglieder erforderlich, wobei der dabei überstrichene Verdrehwinkel gleich dem Teilungswinkel der Stütz- und Schaltglieder ist und sich aus der Anzahl der Schaltstellungen ergibt. Bei drei Schaltstellungen ergibt sich somit ein Teilungswinkel von 120 Grad. Die zwischen zwei Schaltstellungen angeordnete Zwischenstellung ist durch eine gemeinsame Drehbewegung der Stütz- und Schaltglieder um einen Verdrehwinkel erreichbar, dessen Größe nur der Hälfte des Teilungswinkels entspricht.

In einer vorteilhaften Ausführungsform sind den Stütz- und Schaltgliedern Stützrollen zugeordnet, die zur nachgiebigen Abstützung der Schneidmesser mit einer rückwärtigen Stützkante der Schneidmesser zusammenwirken. Die Anzahl der Stützrollen für jedes Stütz- und Schaltglied ist dabei zumindest um eins geringer ausgeführt als die Anzahl der möglichen Schaltstellungen. Vorzugsweise wird im Rahmen der Erfindung von drei Schaltstellungen ausgegangen, so daß in zwei Schaltstellungen eine Stützrolle mit der rückwärtigen Stützkante eines Schneidmessers zusammenwirkt, während in der dritten Schaltstellung durch das Fehlen einer Stützrolle eine Freigabe für eine Schwenkbewegung eines Schneidmessers in eine Nichtschneidstellung gegeben ist. Die so ausgeführten Stütz- und Schaltglieder sind dabei so angeordnet, daß benachbarte Stütz- und Schaltglieder um einen Teilungswinkel gegeneinander versetzt sind.

Eine Veränderung der Schnittlänge des Erntegutes kann nach der Erfindung dadurch herbeigeführt werden, daß die gesamte Schaltwelle mit allen Stütz- und Schaltgliedern um den entsprechenden Teilungswinkel verdreh- und arretierbar ist. Dieser Vorgang kann beispielsweise mit einem dafür vorgesehenen Verstellschlüssel von einer Bedienperson von Hand bequem verstellt werden.

Eine detaillierte Beschreibung des Gegenstandes der Erfindung erfolgt nun anhand eines Ausführungsbeispieles. In der Zeichnung stellt im einzelnen dar:
- Fig. 1: eine Gesamtseitenansicht einer Ballenpresse mit einer erfindungsgemäßen Schneideinrichtung;
- Fig.2: eine vergrößerte, teilweise abgebrochen dargestellte Ansicht der Einzelheit X in Fig.1;
- Fig.3: eine perspektivische Darstellung eines Teiles der Schneideinrichtung mit vier Schneidmessern in einer Schneidstellung;
- Fig.4: eine perspektivische Darstellung eines Teiles der Schneideinrichtung mit drei Schneidmessern in einer Schneidstellung und einem Schneidmesser in einer aufgrund eines Fremdkörpers zurückgeschwenkten Stellung;
- Fig.5: eine perspektivische Darstellung ähnlich Fig.3, wobei sich jedoch jedes zweite Schneidmesser in einer Nichtschneidstellung befindet;
- Fig.6: eine perspektivische Darstellung eines Teiles einer Schaltwelle der Schneideinrichtung mit darauf angebrachten Stütz- und Schaltgliedern;
- Fig.7: eine Seitenansicht eines Stütz- und Schaltgliedes der erfindungsgemäßen Schneideinrichtung;
- Fig.8: eine Darstellung ähnlich Fig.2, wobei die Schneidmesser über eine hydraulische Stelleinrichtung in eine Nichtschneidstellung bewegt sind;

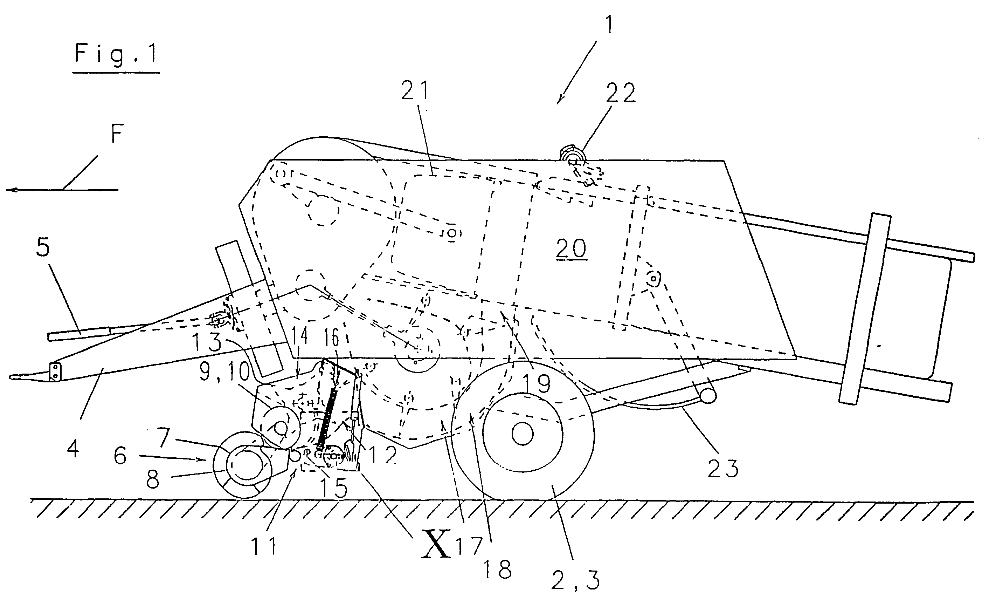

Die in Fig. 1 dargestellte und in Fahrt- und Arbeitsrichtung F über eine Feld- oder Wiesenfläche bewegbare Ballenpresse 1 stützt sich auf Rädern 2,3 zum Erdboden hin ab und ist über eine Zugdeichsel 4 mit einer nicht dargestellten landwirtschaftlichen Zug- und Arbeitsmaschine verbindbar, wobei der Antrieb von der Zapfwelle der Zug- und Arbeitsmaschine aus über eine Gelenkwelle 5 erfolgt. Die Ballenpresse 1 verfügt über eine Aufnahmeeinrichtung 6, durch die in Schwaden liegendes Erntegut wie beispielsweise Stroh, Heu oder angewelktes Grüngut von der Feld- bzw. Wiesenfläche aufhebbar ist. Die Aufnahmeeinrichtung 6 ist im veranschaulichten Ausführungsbeispiel als eine mit Zinken 7 bestückte Aufnahmetrommel 8 bekannter Bauweise ausgeführt, welcher Querförderschnecken 9,10 zur Verringerung der Breite des aufgenommenen Erntegutschwades zugeordnet sind. An die Aufnahmetrommel 8 schließt sich in Flußrichtung des Erntegutes eine Schneideinrichtung 11 an, die im wesentlichen aus einem als Förder- und Schneidrotor ausgeführten Förderorgan 14 mit in einen Förderkanal 12 eingreifenden Förderzinken 13, Schneidmessern 15 und zwischen den Schneidmessern 15 angebrachten Abstreifern 16 besteht. Anschließend an die Schneideinrichtung 11 wird das Erntegut durch die Wirkung einer als Rechenförderer ausgebildeten Fördervorrichtung 17 durch einen Zuführkanal 18 und eine Preßkanaleinlaßöffnung 19 von unten in den Preßkanal 20 gefördert, indem ein hin und her bewegter Preßkolben 21 das Erntegut zu festen quaderförmigen Erntegutballen verdichtet. Beim Erreichen einer vorgewählten Länge der Erntegutballen werden diese mit Bindematerial eingebunden. Dazu sind nur andeutungsweise dargestellte Knoter 22 mit den jeweils zugehörigen Bindenadeln 23 vorhanden. Im dargestellten Ausführungsbeispiel wird die erfindungsgemäße Schneideinrichtung 11 an einer Ballenpresse zur Herstellung von quaderförmigen Erntegutballen verwendet. Gleichermaßen ist es aber auch denkbar, die erfindungsgemäße Schneideinrichtung 11 an einer Ballenpresse zur Herstellung von Rundballen oder an einem Selbstladewagen einzusetzen.

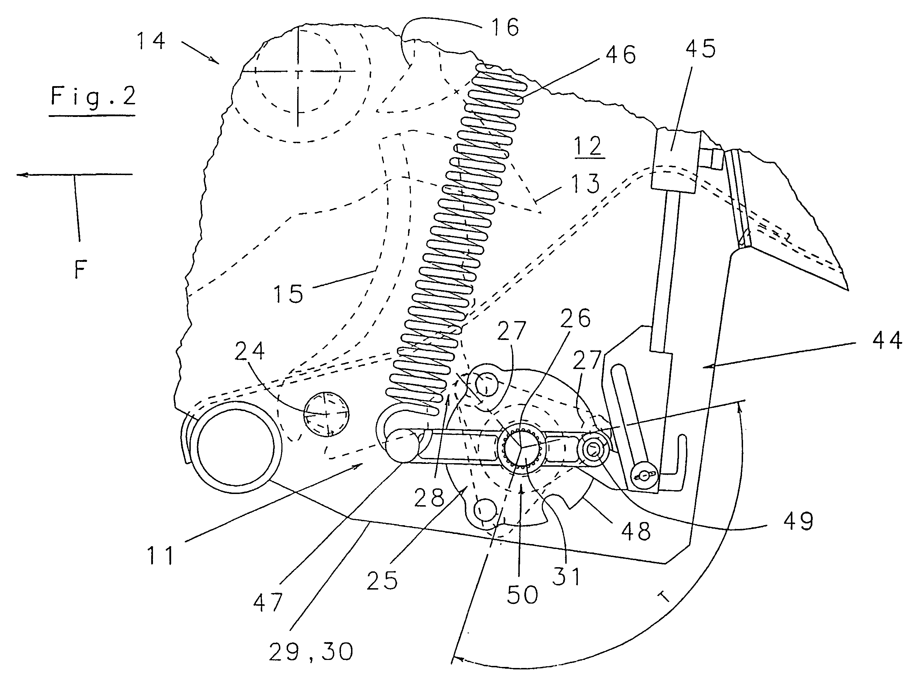

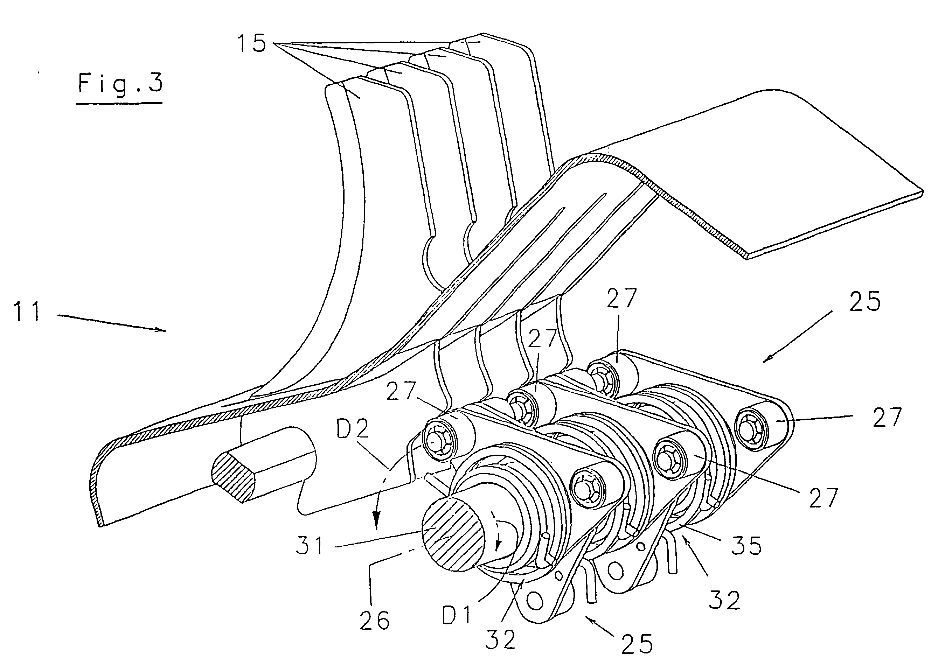

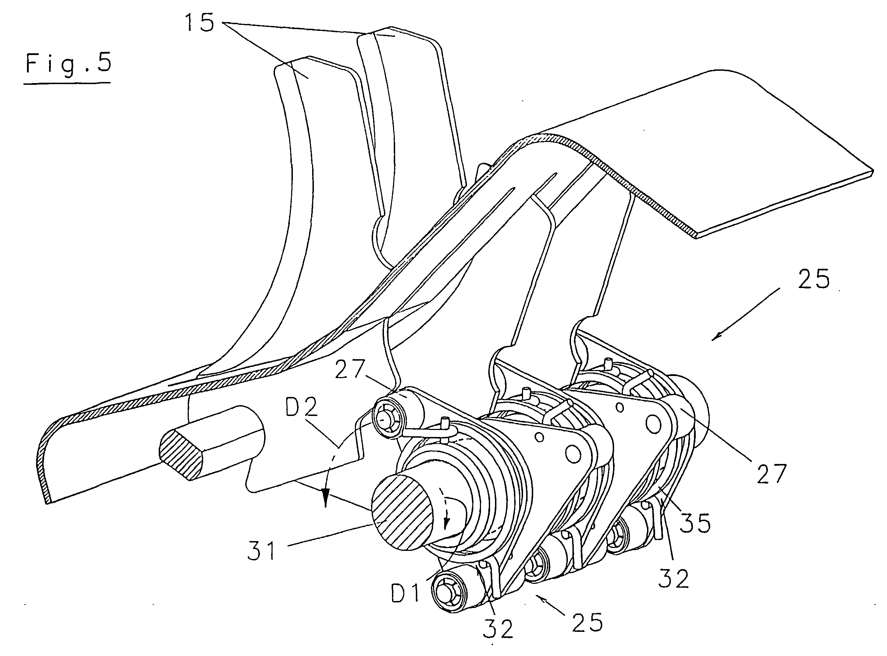

In Fig.2 ist in einer vergrößerten Darstellung die Schneideinrichtung 11 näher veranschaulicht. Wie hier zu erkennen ist, ist jedem Schneidmessern 15, welches um eine horizontal und quer zur Fahrt- und Arbeitsrichtung F ausgerichtete Schwenkachse 24 schwenkbar aus einer in den Förderkanal 12 hineinragenden Schneidstellung in eine unterhalb des Förderkanales 12 befindlichen Nichtschneidstellung und zurück überführbar ist, jeweils ein Stütz- und Schaltglied 25 nachgeordnet, das um eine parallel zur Schwenkachse 24 der Schneidmesser 15 ausgerichteten Achse 26 drehbar angebracht ist. Mit diesen Stütz- und Schaltgliedern 25 ist sowohl eine nachgiebige Abstützung jedes einzelnen Schneidmessers 15 in der Schneidstellung als auch eine Freigabe einer Schwenkbewegung einer wählbaren Anzahl von Schneidmessern (Veränderung der Schnittlänge der Schneideinrichtung 11) oder aller Schneidmesser (Schneidmesser-0-Schaltung) aus der Schneidstellung in die Nichtschneidstellung erreichbar. Dazu weist jedes Stütz- und Schaltglied 25 zumindest drei Schaltstellungen auf, die um einen Teilungswinkel T voneinander beabstandet sind. Jedes Stütz- und Schaltglied 25 ist erfindungsgemäß so ausgebildet, daß in zwei der drei Schaltstellungen in dem dargestellten Ausführungsbeispiel eine Stützrolle 27 angeordnet ist, die mit einer rückwärtigen Stützkante 28 der Schneidmesser 15 so zusammenwirkt, daß eine nachgiebige Abstützung der Schneidmesser 15 in der Schneidstellung erreichbar ist (siehe auch Fig. 3 bis 5). In der dritten Schaltstellung kann aufgrund der fehlenden Stützrolle 27 des Stütz- und Schaltgliedes 25 durch eine ungehinderte Schwenkbewewegung ein Schneidmesser 15 aus der Schneidstellung in die Nichtschneidstellung überführt werden. Dieser Effekt wird dazu verwendet, daß sich entweder alle oder eine wählbare Anzahl von Schneidmessern 15 in der Schneidstellung befinden. Dazu ist es erfindungsgemäß vorgesehen, daß benachbarte Stütz- und Schaltglieder 25 bezüglich der Schaltstellung mit der fehlenden Stützrolle 27 um einen Teilwinkel T, der bei drei Schaltstellungen 120 Grad be-29,30 drehbar gelagerten Schaltwelle 31 angebracht sind. Dadurch ergibt sich bei drei Schaltstellungen, daß in einer Schaltstellung sich alle Schneidmesser 15 aufgrund der Stützwirkung der Stützrolle 27 des Stützund Schaltgliedes 25 in der Schneidstellung befinden, während in den beiden anderen Schaltstellungen jeweils nur die eine oder andere Hälfte der Schneidmesser 15 in der Schneidstellung sind und mit dem Förderorgan 14 ein Schneiden des Erntegutes im Förderkanal 12 bewirken. Die vorstehend beschriebene Art der Veränderung der Schnittlänge der erfindungsgemäßen Schneideinrichtung 11 ist also durch Drehbewegung der Schaltwelle 31 um den Teilungswinkel T in einer Drehrichtung D1 mit allen darauf angebrachten Stütz- und Schaltgliedern 25 erreichbar. In Fig.5 ist eine der letztgenannten Schaltstellungen veranschaulicht.

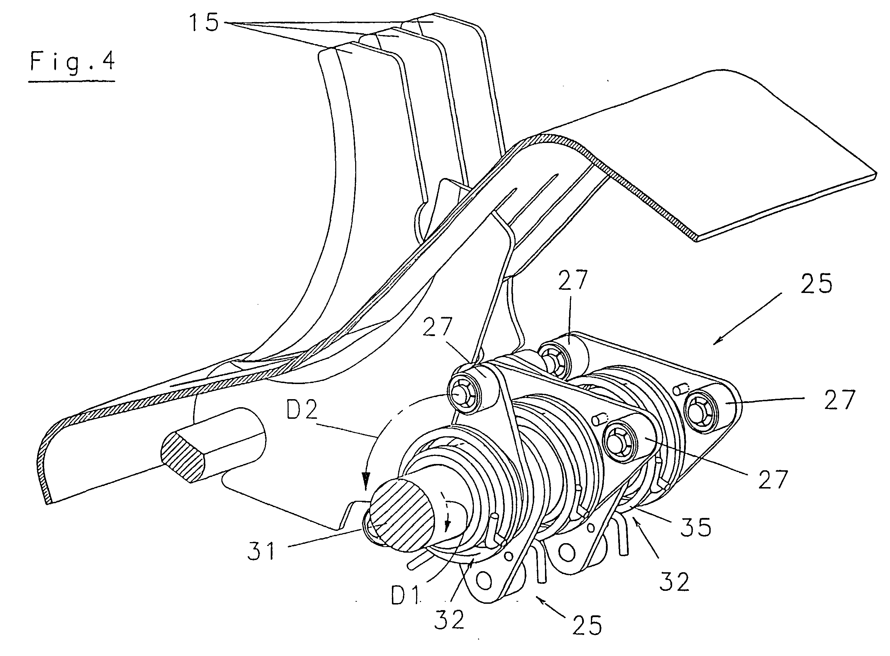

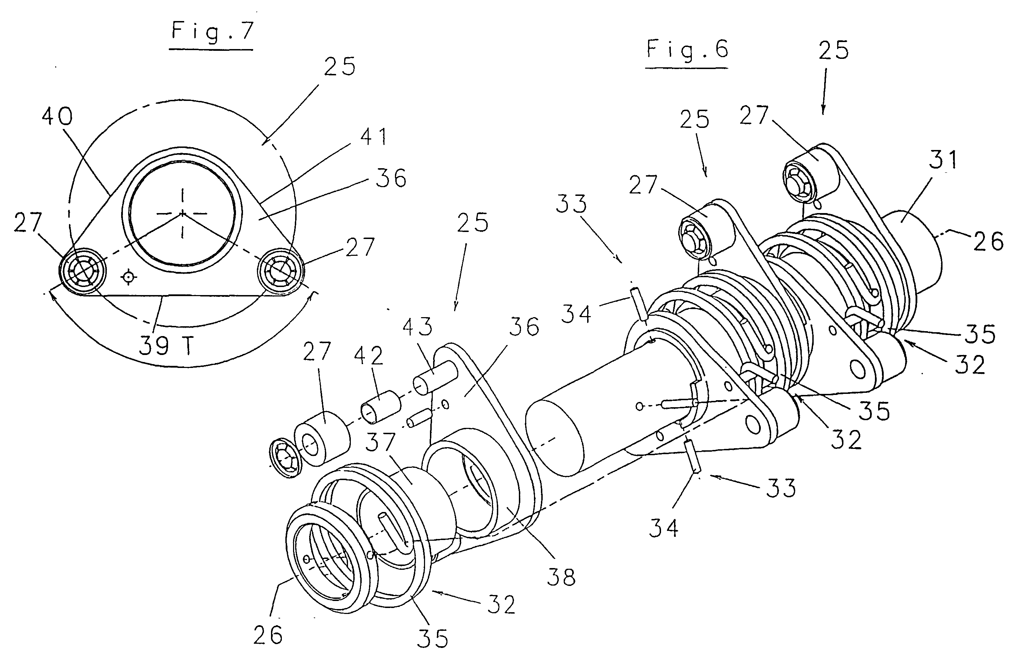

Wie aus der Fig.4 hervorgeht, ist zwischen den jeweiligen Schaltstellungen der Stütz- und Schaltglieder 25 eine Zwischenstellung einstellbar, in der alle Schneidmesser 15 gleichzeitig aus der Schneidstellung in die Nichtschneidstellung bringbar sind. Diese Zwischenstellung wird ebenfalls dann eingenommen, wenn ein oder mehrere Schneidmesser 15, beispielsweise durch einen Stein oder dgl. Fremdkörper im Förderkanal 12 aus der Schneidstelllung herausgeschwenkt werden. Dazu ist jedes Stütz- und Schaltglied 25 durch einen Kraftspeicher 32 nachgiebig mit der Schaltwelle 31 verbunden und ermöglicht somit durch eine begrenzte Drehbewegung in Drehrichtung D2 ein durch einen Fremdkörper im Förderkanal 12 erzwungenes Zurückschwenken der Schneidmesser 15. Nach dem Passieren des Fremdkörpers wird dann infolge der Krafteinwirkung des Kraftspeichers 32 selbsttätig durch eine begrenzte Drehbewegung entgegen der Drehrichtung D2 das Stütz- und Schaltglied 25 in seine Ausstellung zurückbewegt, wodurch die Schneidmesser 15 wieder in die Schneidstellung gelangen. Zur Festlegung der Ausgangsstellung der Stütz- und Schaltglieder 25 sind Anschlagelemente 33 vorgesehen, welche im dargestellten Ausführungsbeispiel als Spannstifte 34 ausgeführt sind. Eine vorteilhafte Ausführungsform der Erfindung sieht vor, die Kraftspeicher 32 als Verdrehfedern 35 auszubilden (siehe auch Fig.6).

Wie weiterhin aus Fig.6 und insbesondere aus Fig.7 ersichtlich, umfaßt ein Stütz- und Schaltelement 25 ein die Form eines gleichschenkligen Dreiecks aufweisendes Trägersegment 36 (mit abgerundeten Ecken), das über eine Lagerbuchse 37, beispielsweise aus Kunststoff in einer Nabe 38 auf der Schaltwelle 31 gelagert ist. Eine vorteilhafte Ausbildung der Erfindung sieht vor, daß im Bereich der Winkel zwischen der Grundseite 39 und den jeweiligen Schenkeln 40,41 die Stützrolle 27 mittels einer Lagerbuchse 42 auf einem Stehbolzen 43 drehbar angebracht ist, während im Bereich des Winkels zwischen den Schenkeln 40,41 die Nabe 38 angeordnet ist.

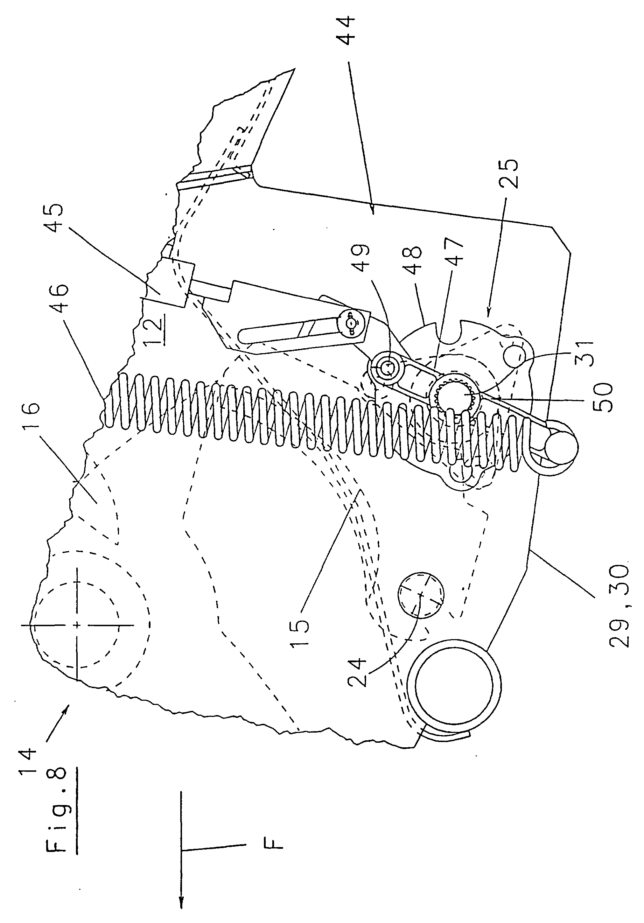

In Fig.8 ist eine Stelleinrichtung 44 dargestellt, über die die Schaltwelle 31 und damit auch die Stütz- und Schaltglieder 25 aus einer Schaltstellung in eine Zwischenstellung (Schneidmesser-0-Schaltung) überführbar ist. Die Stelleinrichtung 44 besteht dazu aus einer hydraulischen Kolben-Zylinder-Anordnung 45, einer Zugfeder 46 und einem Schalthebel 47, der mit einer fest auf der Schaltwelle 31 angebrachten Ronde 48 verbindbar ist. Ist der Schalthebel 47, beispielsweise durch einen Bolzen 49 mit der Ronde 48 verbunden, so kann durch eine Beaufschlagung der hydraulischen Kolben-Zylinder-Anordnung 45 mit Druckmittel eine Schneidmesser-0-Schaltung herbeigeführt werden. Ist jedoch der Schalthebel 47 nicht mit der Ronde 48 verbunden, so kann, beispielweise durch einen nicht dargestellten, auf eine Kerbverzahnung 50 der Schaltwelle 31 aufsteckbaren Verstellschlüssel eine Drehbewegung der Schaltwelle 31 mit den Stütz- und Schaltgliedern 25 manuell durchgeführt und somit die Schnittlänge der Schneideinrichtung 11 verändert werden (siehe auch Fig.2).

Hinsichtlich der Stützwirkung der Stütz- und Schaltglieder 25 gegenüber den Schneidmessern 15 ist noch zu erwähnen, daß in der Ausgangsstellung der Stütz- und Schaltglieder 25 eine große Stützkraft auf die rückwärtigen Stützkanten 28 der Schneidmesser 15 einwirkt. Beim Auftreten einer übermäßigen Beanspruchung der Schneidmesser 15, beispielsweise durch einen Fremdkörper im Förderkanal 12 wird durch die Verdrehung des jeweiligen Stütz- und Schaltgliedes 25 in Drehrichtung D2 (Fig.3 bis 5) die Stützkraft soweit reduziert, daß beim Passsieren des Fremdkörpers keine größeren Beschädigungen der Schneidmesser eintreten.

## Patentansprüche

1. Landwirtschaftliche Erntemaschine wie beispielsweise Ladewagen oder Ballenpresse zum Ernten von landwirtschaftlichem Halm- oder Blattgut mit einem Förderkanal (12) und einer Schneideinrichtung mit einer Mehrzahl von zumindest in einer Reihe angeordneten, schwenkbar gelagerten und in einer Schneidstellung in den Förderkanal (12) hineinragenden Schneidmessem (15), die mit einem mit Förderzinken (13) versehenen und um eine horizontal und quer zur Fahrt- und Arbeitsrichtung (F) ausgerichtete Achse rotierend angetriebenen Förderorgan (14) zur Halmgutzerkleinerung zusammenwirken, und mit einer Stützvorrichtung zur nachgiebigen Abstützung eines jeden einzelnen Schneidmessers (15) in der Schneidstellung sowie mit einer Schalteinrichtung zur Freigabe der Stützvorrichtung für das Verschwenken aller oder einer Anzahl von Schneidmessern (15) in eine Nichtschneidstellung, wobei jedem Schneidmesser (15) ein um eine parallel zu einer Schwenkachse (24) der Schneidmesser (15) ausgerichtete Achse (26) zur nachgiebigen Abstützung eines jeden einzelnen Schneidmessers (15) in der Schneidstellung und zur Freigabe einer Schwenkbewegung des Schneidmessers (15) aus der Schneidstellung in eine Nichtschneidstellung drehbar angebrachtes Stützglied zugeordnet ist, **dadurch gekennzeichnet, daß** jedes Stützglied als Stütz- und Schaltglied (25) ausgebildet ist, das auf einer quer zur Fahrtrichtung (F) angeordneten Schaltwelle (31) drehbar gelagert und über einen Kraftspeicher (32) nachgiebig mit der Schaltwelle (31) verbunden ist.

2. Erntemaschine nach Anspruch 1, **dadurch gekennzeichnet, daß** der Kraftspeicher eine Verdrehfeder (35) ist.

3. Erntemaschine nach Anspruch 1 oder 2, **dadurch gekennzeichnet, daß** die Stütz- und Schaltglieder (25) so ausgebildet sind, daß während einer Umdrehung um die Achse (26) zumindest drei Schaltstellungen einstellbar sind.

4. Erntemaschine nach einem der Ansprüche 1 bis 3, **dadurch gekennzeichnet, daß** die Stütz- und Schaltglieder (25) so ausgeführt sind, daß während einer Umdrehung um die Achse (26) eine zwischen den jeweiligen Schaltstellungen angeordnete Zwischenstellung einstellbar ist.

5. Erntemaschine nach einem der Ansprüche 1 bis 4, **dadurch gekennzeichnet, daß** die Stütz- und Schaltglieder (25) so gestaltet sind, daß während einer Umdrehung um die Achse (26) zumindest zwei Schaltstellungen zur nachgiebigen Abstützung der zugehörigen Schneidmesser (15) in der Schneidstellung und eine Schaltstellung zur Freigabe einer Schwenkbewegung der zugehörigen Schneidmesser (15) aus der Schneidstellung in einer Nichtschneidstellung erreichbar sind.

6. Erntemaschine nach einem der Ansprüche 1 bis 5, **dadurch gekennzeichnet, daß** in der Zwischenstellung eines Stütz- und Schaltgliedes (25) ebenfalls eine Schwenkbewegung des zugehörigen Schneidmessers (15) aus der Schneidstellung in eine Nichtschneidstellung durchführbar ist.

7. Erntemaschine nach einem der Ansprüche 1 bis 6, **dadurch gekennzeichnet, daß** die jeweiligen Schaltstellungen durch eine Drehbewegung der Stütz- und Schaltglieder (25) um einen Teilungswinkel (T) erreichbar sind.

8. Erntemaschine nach einem der Ansprüche 1 bis 7, **dadurch gekennzeichnet, daß** der Teilungswinkel (T) zwischen den Schaltstellungen vorzugsweise 120 Grad beträgt.

9. Erntemaschine nach einem der Ansprüche 1 bis 8, **dadurch gekennzeichnet, daß** ein Stütz- und Schaltglied (25) eine Anzahl von Stützrollen (27) aufweist, die zumindest um eins geringer ist als die Anzahl der möglichen Schaltstellugnen.

10. Erntemaschine nach einem der Ansprüche 1 bis 9, **dadurch gekennzeichnet, daß** ein Stütz- und Schaltglied (25) zumindest zwei Stützrollen (27) umfaßt, wobei in einer Schaltstellung zur nachgiebigen Abstützung der Schneidmesser (15) in der Schneidstellung eine der Stützrollen (27) mit einer rückwärtigen Stützkante (28) des zugehörigen Schneidmessers (15) zusammenwirkt.

11. Erntemaschine nach einem der Ansprüche 1 bis 10, **dadurch gekennzeichnet, daß** die Stütz- und Schaltglieder (25) benachbarter Schneidmesser (15) um zumindest einen Teilungswinkel (T) gegeneinander versetzt angebracht sind.

12. Erntemaschine nach einem der Ansprüche 1 bis 11, **dadurch gekennzeichnet, daß** jedem einzelnen Stütz- und Schaltglied (25) ein separater Kraftspeicher (32) zugeordnet ist.

13. Erntemaschine nach einem der Ansprüche 1 bis 12, **dadurch gekennzeichnet, daß** die Stütz- und Schaltglieder (25) auf der Schaltwelle (31) in einer Grundstellung an einem Anschlagelement (33) anliegen.

14. Erntemaschine nach einem der Ansprüche 1 bis 13, **dadurch gekennzeichnet, daß** ein Stütz- und Schaltglied (25) aus einem in etwa dreieckförmig ausgebildeten Trägersegment (36) gebildet ist und eine Nabe (38) zur Lagerung auf der Schaltwelle (31) aufweist.

15. Erntemaschine nach einem der Ansprüche 1 bis 12, **dadurch gekennzeichnet, daß** das Trägersegment (36) die Form eines gleichschenkligen Dreiecks aufweist, wobei die Ecken abgerundet sind.

16. Erntemaschine nach Anspruch 15, **dadurch gekennzeichnet, daß** im Bereich des Winkels zwischen der Grundseite (39) und einem Schenkel (40,41) jeweils eine Stützrolle (27) drehbar angebracht ist.

17. Erntemaschine nach Anspruch 15 und 16, **dadurch gekennzeichnet, daß** im Bereich des Winkels zwischen den beiden Schenkeln (40,41) die Nabe (38) des Stützund Schaltgliedes (25) angeordnet ist.

## Claims

1. Agricultural harvesting machine such as a loading waggon or bale press for the harvesting of agricultural material with stalks or stems or leaves, with a conveying channel (12) and a cutting device with a plurality of cutting blades (15) arranged at least in one row, mounted so as to be capable of pivoting and in a cutting position projecting into the delivery channel (12), said blades interacting with a driven conveying element (14) provided with prongs (13) and rotating about an axis aligned horizontally and transverse to the direction of travel and operation (F), for the comminution of material with stalks or stems, and with a support device for the pliant support of each individual cutting blade (15) in the cutting position, as well as with a switch device for releasing the support device to allow for the pivoting of all or a number of cutting blades (15) into a non-cutting position, whereby allocated to each cutting blade (15) is a support member, arranged to be rotatable about an axis aligned parallel to a pivot axis (24) of the cutting blades (15), for the pliant support of each individual cutting blade (15) in the cutting position and to allow a pivot movement of the cutting blade (15) out of the cutting position into a non-cutting position, **characterised in that** each support element is designed as a support and switch element (25), which is rotatably mounted on an actuating shaft (31) arranged transverse to the direction of travel (F) and is connected in a pliant manner to the switching shaft (31) by means of an energy storage mechanism (32).

2. Harvesting machine according to claim 1, **characterised in that** the energy storage mechanism is a torsion spring (35).

3. Harvesting machine according to claim 1 or 2, **characterised in that** the support and switching elements (25) are designed in such a way that, during a rotation about the axle (26), at least three switching positions can be set

4. Harvesting machine according to one of claims 1 to 3, **characterised in that** the support and switching elements (25) are designed in such a way that, during a rotation about the axle (26), an intermediate position can be set, arranged between the individual switching positions.

5. Harvesting machine according to one of claims 1 to 4, **characterised in that** the support and switching elements (25) are designed in such a way that, during a rotation about the axle (26), at least two switching positions can be achieved for the pliant support of the cutting blades (15) pertaining to it when in the cutting position, and for release allowing a pivot movement of the cutting blade (15) pertaining to it from the cutting position into a non-cutting position.

6. Harvesting machine according to one of claims 1 to 5, **characterised in that,** in the intermediate position of a support and switching element (25), a pivot movement of the cutting blade (15) pertaining to it can likewise be carried out from the cutting position into a non-cutting position.

7. Harvesting machine according to one of claims 1 to 6, **characterised in that** the individual switching positions can be attained by a rotational movement of the support and switching elements (25) about a division angle (T).

8. Harvesting machine according to one of claims 1 to 7, **characterised in that** the division angle (T) between the switching positions amounts for preference to 120 degrees.

9. Harvesting machine according to one of claims 1 to 8, **characterised in that** a support and switching element (25) exhibits a number of support rollers (27) which is at least one less than the number of possible switching positions.

10. Harvesting machine according to one of claims 1 to 9, **characterised in that** a support and switching element (25) comprises at least two support rollers (27), whereby, in a switching position for the pliant support of the cutting blades (15) in the cutting position, one of the support rollers (27) interacts with a rearward support edge (28) of the cutting blade (15) pertaining to it.

11. Harvesting machine according to one of claims 1 to 10, **characterised in that** the support and switching elements (25) of adjacent cutting blades (15) are located offset to one another by at least one division angle (T).

12. Harvesting machine according to one of claims 1 to 11, **characterised in that** a separate energy storage mechanism (32) is allocated to each individual support and switching element (25).

13. Harvesting machine according to one of claims 1 to 12, **characterised in that** the support and switching elements (25) in a basic position on the actuating shaft (31) are located in contact with a stop element (33).

14. Harvesting machine according to one of claims 1 to 13, **characterised in that** a support and switching element (25) is formed from an approximately triangular carrier segment (36) and exhibits a hub (38) for mounting on the actuating shaft (31).

15. Harvesting machine according to one of claims 1 to 12, **characterised in that** the carrier segment (36) exhibits the shape of an equilateral triangle, whereby the corners are rounded.

16. Harvesting machine according to claim 15, **characterised in that** a support roller (27) is rotatably mounted in each case in the area of the angle between the base side (39) and one of the long sides (40, 41).

17. Harvesting machine according to one of claims 15 and 16, **characterised in that** the hub (38) of the support and switching element (25) is arranged in the area of the angle between the two long sides (40, 41).

## Revendications

1. Moissonneuse agricole telle que par exemple un véhicule de chargement ou une presse à balles destiné(e) à moissonner des produits à tige ou à feuille, présentant un canal de transport (12) et un dispositif de coupe comportant une pluralité de couteaux de coupe (15) pénétrant dans le canal de transport (12) dans une position de coupe, positionnés de manière à pouvoir pivoter, disposés au moins en une rangée et qui coopèrent avec un organe de transport (14) muni de dents de transport (13) et entraîné en rotation autour d'un axe orienté horizontalement et transversalement au sens du déplacement et du fonctionnement (F) afin de fractionner le produit à tige, et un dispositif d'appui destiné à supporter de façon élastique chaque couteau de coupe (15) individuel dans la position de coupe ainsi qu'un équipement de commutation destiné à libérer le dispositif d'appui afin de faire pivoter la totalité ou un nombre de couteaux de coupe (15) dans une position de non-coupe, à chaque couteau de coupe (15) un élément d'appui étant affecté qui est placé de manière à pouvoir pivoter autour d'un axe (26) orienté parallèlement à un axe de pivotement (24) des couteaux de coupe (15) afin de supporter de façon flexible chaque couteau de coupe (15) individuel dans la position de coupe et afin de libérer un mouvement de pivotement du couteau de coupe (15) depuis une position de coupe dans une position de non-coupe, **caractérisée en ce que** chaque élément d'appui est conformé en tant qu'élément de commutation et d'appui (25) qui est positionné de façon à pouvoir pivoter sur un arbre de commutation (31) disposé perpendiculairement au sens du déplacement (F) et est raccordé de façon élastique via un accumulateur de force (32) à l'arbre de commutation (31).

2. Moissonneuse selon la revendication 1, **caractérisée en ce que** l'accumulateur de force est un ressort à torsion (35).

3. Moissonneuse selon la revendication 1 ou 2, **caractérisée en ce que** les éléments de commutation et d'appui (25) sont conçus de façon qu'au moins trois positions de commutation puissent être réglées pendant une rotation autour de l'axe (26).

4. Moissonneuse selon l'une quelconque des revendications 1 à 3, **caractérisée en ce que** les éléments de commutation et d'appui (25) sont exécutés de sorte que pendant une rotation autour de l'axe (26) une position intermédiaire disposée entre les positions de commutation respectives peut être réglée.

5. Moissonneuse selon l'une quelconque des revendications 1 à 4, caractérisée ne ce que les éléments de commutation et d'appui (25) sont conformés de sorte que l'on peut obtenir pendant une rotation autour de l'axe (26) au moins deux positions de commutation destinées à supporter de façon élastique les couteaux de coupe (15) associés dans la position de coupe et une position de commutation destinée à libérer un mouvement de pivotement des couteaux de coupe (15) depuis la position de coupe dans une position de non-coupe.

6. Moissonneuse selon l'une quelconque des revendications 1 à 5, **caractérisée en ce que** dans une position intermédiaire d'un élément de commutation et d'appui (25), un mouvement de pivotement du couteau de coupe associé (15) depuis la position de coupe en une position de non-coupe est également réalisable.

7. Moissonneuse selon l'une quelconque des revendications 1 à 6, **caractérisée en ce que** les positions de commutation respectives peuvent être obtenues par un mouvement de rotation des éléments de commutation et d'appui (25) sur un pas angulaire (T).

8. Moissonneuse selon l'une quelconque des revendications 1 à 7, **caractérisée en ce que** le pas angulaire (T) entre les positions de commutation est de préférence de 120 degrés.

9. Moissonneuse selon l'une quelconque des revendications 1 à 8, **caractérisée en ce qu'**un élément de commutation et d'appui (25) présente un nombre de rouleaux d'appui (27) qui est inférieur d'au moins une unité au nombre de positions possibles de commutation.

10. Moissonneuse selon l'une quelconque des revendications 1 à 9, **caractérisée en ce qu'**un élément de commutation et d'appui (25) comporte au moins deux rouleaux d'appui (27) dont l'un coopère, dans une position de commutation destinée à supporter de façon élastique les couteaux de coupe (15) dans la position de coupe, avec une arête d'appui arrière du couteau de coupe associé (15).

11. Moissonneuse selon l'une quelconque des revendications 1 à 10, **caractérisée en ce que** les couteaux de coupe (15) adjacents aux éléments de commutation et d'appui (25) sont placés les uns par rapport aux autres avec un décalage d'au moins un pas angulaire (T).

12. Moissonneuse selon l'une quelconque des revendications 1 à 11, **caractérisée en ce que**, à chaque élément de commutation et d'appui (25) individuel est affecté un accumulateur de force séparé (32).

13. Moissonneuse selon l'une quelconque des revendications 1 à 12, **caractérisée en ce que** les éléments de commutation et d'appui (25) sur l'arbre de commutation (31) sont adjacents à un élément formant butée (33) dans une position normale.

14. Moissonneuse selon l'une quelconque des revendications 1 à 13, **caractérisée en ce qu'**un élément de commutation et d'appui (25) est formé d'un segment support (36) conformé environ en forme de triangle et présente un moyeu (38) destiné au positionnement sur l'arbre de commutation (31).

15. Moissonneuse selon l'une quelconque des revendications 1 à 12, **caractérisée en ce que** le segment support (36) présente la forme d'un triangle isocèle dont les sommets sont arrondis.

16. Moissonneuse selon la revendication 15, **caractérisée en ce qu'**un rouleau d'appui (17) est à chaque fois placé de façon à pouvoir tourner, dans la zone de l'angle compris entre le côté de base (39) et un côté (40, 41).

17. Moissonneuse selon la revendication 15 et 16, **caractérisée en ce que** dans la zone de l'angle compris entre les deux côtés (40, 41) est disposé le moyeu (38) de l'élément de commutation et d'appui (25).
